# FASCICULE DE BREVET EUROPEEN

(11) **EP 1 935 528 B1**
(45) Date de publication et mention de la délivrance du brevet: **07.07.2010**
(21) Numéro de dépôt: 07291454.2
(22) Date de dépôt: 05.12.2007
(51) Int. Cl.: B21D 53/26, B21D 53/10, F16C 33/64, F16C 35/067, F16C 43/04, F16C 35/077

(54) **Procédé d'assemblage d'une bague de roulement avec un organe mécanique**
Verfahren zur Montage eines Laufrings mit einem mechanischen Organ
Method for assembling a bearing ring with a mechanical element

(30) Priorité: 11.12.2006 FR 0610770
(43) Date de publication de la demande: 25.06.2008
(73) Titulaire: S.N.R. ROULEMENTS, 74000 Annecy (FR)
(72) Inventeur: Brisson, Sébastien, 74130 Contamine sur Arve (FR); Ehinger, Pierre, 74210 Faverges (FR); Maucout, Denis, 74230 Dingy Saint Clair (FR)
(74) Mandataire: Novagraaf Technologies

(56) Documents cités:
- EP-A- 0 189 365
- EP-A2- 0 794 072
- EP-B1- 0 851 140
- WO-A-03/056197
- DE-A1-102004 055 204
- DE-U1- 20 304 989

## Description

### DOMAINE TECHNIQUE DE L'INVENTION

L'invention est relative à un procédé d'assemblage d'une pièce sur une bague de roulement, et plus particulièrement à un procédé faisant appel à une déformation de la matière périphérique de la bague ou de la pièce.

### ETAT DE LA TECHNIQUE ANTERIEURE

Les bagues de roulement sont des pièces annulaires destinées à être solidarisée à un organe fixe ou rotatif et devant constituer des chemins de roulement pour des corps roulants, tels que des billes, rouleaux ou aiguilles, d'un palier à roulement. Elles doivent donc avoir, au moins au niveau des chemins de roulement, une dureté élevée.

Les bagues de roulement sont généralement fixées à l'organe qu'elles équipent par emmanchement à froid ou à chaud, plus rarement par des éléments de montage tels que des vis. On sait également fixer une bague de roulement à une pièce par déformation d'une partie périphérique de la bague, obtenue par exemple par emboutissage ou poinçonnage. Dans certaines circonstances, notamment lorsque l'épaisseur de matière à déformer devient importante, l'énergie à mettre en oeuvre pour la déformation est importante, et nécessite des presses de grande puissance.

Dans le document EP 1 401 665 est décrit un procédé de fixation d'un palier de moyeu d'une roue de véhicule. Le moyeu est pourvu d'un chambrage cylindrique dans lequel est introduite en force la bague extérieure du palier. Un anneau élastique est ensuite disposé à l'extrémité libre de la bague. Le chambrage est pourvu d'un bord faisant saillie extérieurement. Ce rebord est rabattu sur l'anneau élastique par déformation à froid à l'aide d'une molette, afin d'appliquer sur l'anneau un contrainte axiale. L'étape initiale d'insertion en force de la bague dans la chambrage est délicate car elle comporte un risque de déformation de la bague.

Dans le document EP A 0189365 (REXNORD INC, 30-07-1986), est décrit un palier à contact de roulement dans lequel la piste extérieure est fabriquée dans une sorte d'acier tel qu'après un traitement à haute température et un durcissement local celui-ci présente une ductilité suffisante pour créer une lèvre issue de cette piste permettant la rétention du palier dans son support. Selon ce document, la piste extérieure est durcie localement le long de la piste de roulement.

Le moyen de mise en place de la bague extérieure du roulement dans son support de manière à ne pas déformer cette bague n'est pas pris en compte.

### EXPOSE DE L'INVENTION

L'invention vise donc à remédier aux inconvénients de l'état de la technique, de manière à proposer un procédé permettant d'assembler une bague de roulement à une pièce, avec une très faible dispersion des cotes d'assemblage et une faible puissance.

A cet effet, et suivant un premier aspect de l'invention, celle-ci a pour objet un procédé d'assemblage de deux éléments constitués d'une part par une bague de roulement pourvue d'au moins un chemin de roulement et d'autre part par un organe mécanique, le procédé comportant les étapes suivantes :
- un premier des deux éléments est conformé de manière à présenter un rebord annulaire déformable définissant un axe géométrique de référence ;
- l'autre élément est conformé de manière à présenter une surface annulaire de maintien ;
- les deux éléments sont mis en appui l'un contre l'autre, le deuxième élément étant libre de se mouvoir dans un plan transversal par rapport au premier élément et un outil de roulage ayant par rapport au premier élément un mouvement relatif de révolution autour de l'axe géométrique de référence du premier élément vient repousser le rebord pour rabattre radialement le rebord sur la surface de maintien en progressant d'une position de contact initial avec le rebord à une position de contact final avec le rebord en un temps correspondant à au moins cinq révolutions.

La déformation progressive du rebord par une avance lente de l'outil de roulage conjuguée à la liberté de mouvement de l'autre élément dans le plan perpendiculaire à l'axe de rotation permet un auto-centrage du deuxième élément par rapport à l'axe de rotation du premier élément. La déformation du rebord peut être orientée radialement vers l'intérieur ou vers l'extérieur.

Le mouvement relatif de révolution entre l'outil de roulage et le premier élément peut être réalisé en maintenant le premier élément fixe par rapport à un bâti de machine et en faisant tourner l'outil. Alternativement, et suivant un mode de réalisation préféré, le premier élément est fixé à un mandrin qui est mis en rotation pour entraîner les deux éléments. Avantageusement, l'autre élément est entraîné par friction avec le premier élément. Dans ce cas, le mouvement de l'outil de roulage dans un référentiel fixe par rapport au mandrin peut être un mouvement plan, par exemple un mouvement de translation.

Suivant un mode de réalisation, l'outil de roulage avance de la position initiale de contact jusqu'à la position finale de contact à une vitesse linéaire correspondant à une progression inférieure à 0,2 mm par tour.

La vitesse tangentielle de rotation doit être adaptée pour ne pas échauffer le rebord. Dans un exemple de réalisation, le mandrin tourne à une vitesse inférieure à 700 tours par minutes durant l'étape de repoussage.

Suivant une mode de réalisation, le premier élément est la bague. Le procédé peut alors comprendre une étape de recuit de l'ensemble de la bague pour conférer au rebord une ductilité et une résilience permettant son repoussage par l'outil de roulage, l'étape de recuit précédant l'étape de montage sur le tour rotatif. Une étape de traitement thermique ou thermochimique localisé peut être réalisée après l'étape de recuit au niveau du ou des chemins de roulement pour y introduire des contraintes résiduelles de compression localisées et ainsi augmenter la dureté du ou des chemins de roulement. L'étape de traitement thermique ou thermochimique localisé peut être effectuée avant l'étape de montage de la bague sur le tour. On peut également effectuer une trempe globale trempe globale des deux éléments après leur assemblage.

Alternativement il est possible de prévoir une étape de recuit préalable d'une partie seulement de la bague pour conférer au rebord une ductilité et une résilience permettant son repoussage par l'outil de roulage, l'étape de recuit précédant l'étape de montage sur le tour rotatif. L'étape de recuit peut alors être précédée d'une étape de trempe globale de la bague.

D'autres traitements localisés des chemins roulements tels que des traitements thermochimiques, par exemple par carbonitruration, sont également possible, le but de ces traitements étant de conférer aux chemins de roulement une structure métallurgique martensitique et une dureté suffisante dans l'application.

Suivant un mode de réalisation, le premier élément est constitué au moins au niveau du rebord par un matériau initialement fritté non fibré, donc ductile, dont les propriétés mécaniques sont ensuite modifiées au cours de l'étape de roulage, notamment par un phénomène de compression qui en augmente la résistance mécanique.

Le procédé est applicable à différents type de bagues et d'organes mécaniques. L'organe mécanique peut ainsi comporter par exemple un arbre s'étendant suivant l'axe de rotation de la bague ou une couronne dentée ou un tambour de poulie. Il est à noter qu'il est applicable notamment à des bagues massives qui ne sont pas en tôle.

Selon un autre mode de réalisation, le deuxième élément est la bague.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 est un schéma illustrant un procédé de montage selon un premier mode de réalisation de l'invention ;
- la figure 2 illustre un procédé de montage selon un deuxième mode de réalisation de l'invention ;
- la figure 3 illustre un procédé de montage selon un troisième mode de réalisation de l'invention ;
- les figures 4A à 4C illustrent différentes étapes d'un procédé de montage selon un quatrième mode de réalisation de l'invention ;
- la figure 5 illustre un procédé de montage selon un cinquième mode de réalisation de l'invention.

Pour alléger la présentation, les éléments communs aux différents modes de réalisation seront désignés par les mêmes signes de référence et leur description ne sera pas systématiquement répétée.

### DESCRIPTION DETAILLEE D'UN MODE DE REALISATION

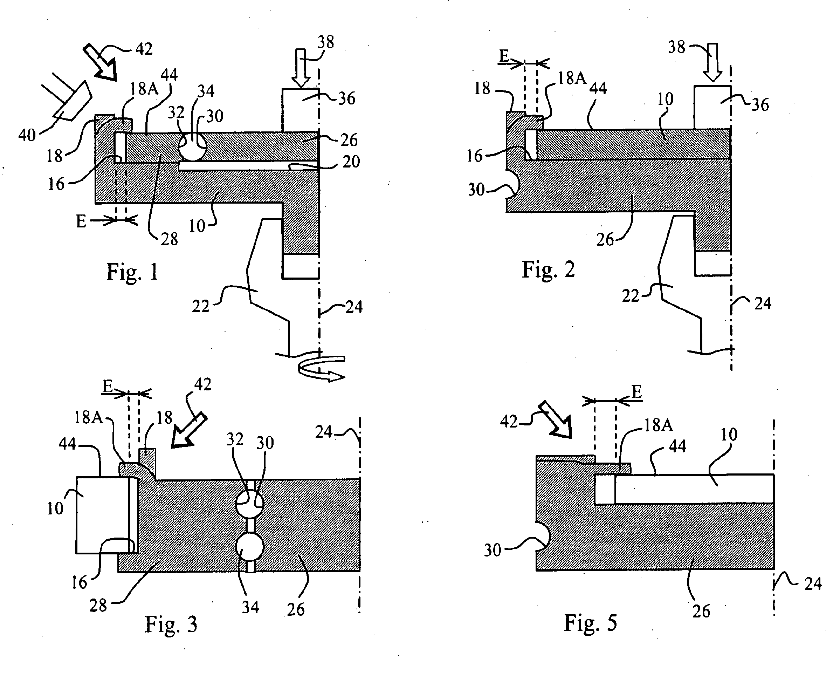

Sur la figure 1 est représentée une pièce 10 d'un organe que l'on souhaite équiper d'un roulement 12. Initialement, la pièce à équiper 10 comporte un logement 14 pour recevoir le roulement, ce logement étant pourvu d'une surface d'appui axial 16 entouré d'un rebord annulaire 18 faisant saillie axialement, et d'un chambrage 20 situé en retrait par rapport à la surface d'appui axial 16. La pièce est fixée au mandrin 22 d'un tour d'axe géométrique de rotation 24. Le roulement 12 est, dans cet exemple, constitué d'une bague intérieure 26 et d'une bague extérieure 28 sur lesquelles sont formés des chemins de roulement 30, 32 recevant des corps roulants 34 constitués par des billes. Le roulement 12 est placé dans le logement, de telle manière que seule la bague extérieure 28 soit au contact de la pièce 10 au niveau de la surface d'appui 16. Dans cette position, un jeu E existe entre le roulement et le rebord du logement. Un outil 36 mobile en translation suivant l'axe 36 mais fixe en rotation est plaqué contre la bague intérieure 26 du roulement et met indirectement la bague extérieure 28 du roulement en appui contre la surface d'appui 16. La pression exercée par l'outil 36, schématisée par la flèche 38 sur la figure 1, est suffisante pour que la pièce 10, entraînée par le mandrin 22, entraîne la bague extérieure 28 avec elle dans son mouvement de rotation. La pression d'appui doit toutefois être suffisamment faible pour permettre une certaine liberté de positionnement de la bague extérieure 28 par rapport à la pièce 10, dans un plan perpendiculaire à l'axe 24 du mandrin, dans les limites du jeu E avec le rebord 18.

Le mandrin 22 est mis en rotation, entraînant simultanément la pièce 10 et la bague extérieure 28 du roulement. Une molette de roulage 40 vient alors déformer progressivement le rebord 18 de la pièce par pliage. Le mouvement de la molette en direction radiale, schématisé par la flèche 42, est très progressif, de sorte que le rebord en cours de déformation se rapproche progressivement de la bague extérieure. Une fois le contact établi entre le rebord 18 et la bague extérieure en un point de la périphérie de la bague, le roulement 12, qui peut se mouvoir dans le plan perpendiculaire à l'axe de rotation, tend à se repositionner. La rotation de la pièce 10 conjuguée au mouvement radial de la molette 40 favorise alors un auto-centrage du roulement 12 suivant l'axe de rotation 24 du mandrin 22. La position finale 18A du rebord, en appui contre une surface de maintien 44 de la bague extérieure 28, est schématisée sur la figure 1.

Dans ce mode de réalisation, il est avantageux de maintenir la bague intérieure 26 du roulement fixe en rotation. De cette façon, les billes 34 sont entraînées en rotation par rapport aux deux bagues 26, 28 lors de la déformation du rebord 18 ce qui évite une déformation locale des chemins de roulement au niveau des billes 34.

La figure 2 représente une variante qui se distingue du procédé précédemment décrit essentiellement par le fait que l'élément déformé est constitué par la bague intérieure 26 d'un roulement 12. Cette bague 26 comporte un chemin de roulement 30 et un rebord 18 délimitant un logement 14 dont le fond constitue une surface d'appui 16 pour la pièce 10 devant être équipée.

Un traitement thermique préalable à la fixation des éléments est nécessaire pour que la pièce constituant la bague 26 ait une dureté élevée au niveau du chemin de roulement 30 et une bonne capacité à la déformation au niveau du rebord 18. Deux méthodes sont proposées pour obtenir ses propriétés locales différentes.

On peut procéder tout d'abord à une trempe de la bague 26, qui confère à l'ensemble de la bague une dureté élevée, puis effectuer un recuit local au niveau du rebord 18.

Alternativement, on peut recuire l'ensemble de la bague 26, puis effectuer un traitement thermique local au niveau du chemin de roulement 30 pour obtenir à ce niveau un changement de phase de l'acier lui conférant la dureté souhaitée.

Dans cet exemple de réalisation, l'élément 10 sur lequel la bague 26 est monté est mis en appui contre la surface d'appui 16 par l'intermédiaire d'un outil 36 qui est laisse à l'élément 10 une mobilité en rotation autour de l'axe 24 et en translation dans le plan perpendiculaire à l'axe 24. La bague 26 est fixée au mandrin d'un tour et mise en rotation, entraînant avec elle la pièce 10. Une molette de roulage vient progressivement replier le rebord 18. Un centrage de l'élément 10 par rapport à l'axe 24 se produit lorsque le rebord partiellement plié entre en contact avec l'élément 10, d'abord en un point puis progressivement sur l'ensemble de la périphérie de l'élément 10. Le pliage s'achève lorsque l'élément 10 se trouve sertie dans le logement 14, le rebord 18 ayant pris la position 18A en appui contre la surface de maintien 44.

La figure 3 représente une autre variante dans laquelle l'élément déformé est constitué par une bague extérieure 28 de roulement, l'organe devant être équipé de cette bague étant une couronne dentée 10. Dans cet exemple, la bague extérieure 28 est pourvue d'une surface d'appui 16 pour la couronne dentée 10 et d'un rebord 18. Un jeu radial E existe initialement entre la couronne dentée 10 et la rebord 18. Un outil annulaire vient maintenir la couronne 10 en appui contre la surface d'appui 16 lors de la mise en rotation de la bague extérieure fixée au mandrin d'un tour. Le rebord 18 est rabattu progressivement sur la couronne 10 par une molette (non représentée) dont le mouvement symbolisé par la flèche 42 a une composante radiale dirigée vers l'extérieur. Dans cet exemple également, le rabattement progressif du rebord permet un centrage de la couronne par rapport à l'axe de rotation 24 du tour.

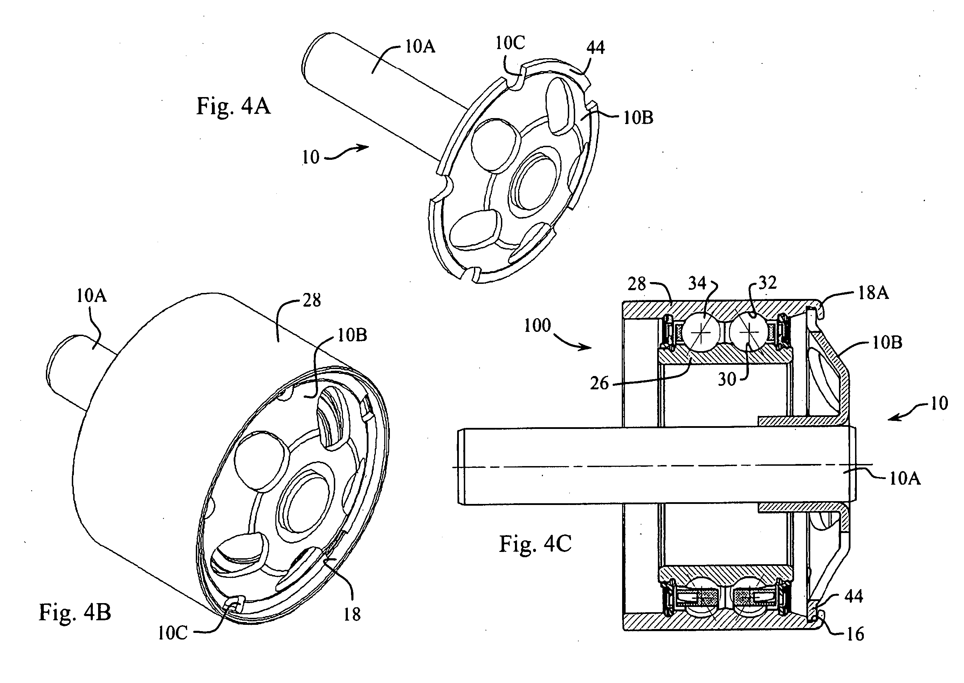

Sur les figures 4A à 4C est illustrée une poulie 100 montée par le procédé selon l'invention. La poulie comporte un tambour 28 constituant la bague extérieure d'un roulement, pourvu de deux chemins de roulement 32 logeant les billes 34 du roulement. Le tambour 28 est pourvu d'une surface d'appui transversale 16 et d'un rebord 18 faisant saillie par rapport à la surface d'appui 16. La poulie 100 comporte par ailleurs un arbre 10A sur lequel est emmanché un flasque 10B pourvu à sa périphérie d'échancrures 10C.

Dans une première étape de montage, le flasque 10B est emmanché en force sur l'axe 10A, de manière à former l'élément visible 10 sur la figure 4A.

Le tambour 28 est de son côté réalisé par roulage d'une tôle recuit. Puis un traitement thermique localisé est appliqué au niveau des chemins de roulement 32 pour obtenir la dureté forte recherchée, en introduisant des contraintes résiduelles de compression localisées au niveau des chemins de roulement. Ce traitement localisé ne nuit pas à la résilience du reste de la pièce et notamment du rebord 18.

La périphérie du flasque 10B est introduite dans le logement circonscrit par le rebord 18, en appui contre la surface d'appui 16, comme illustré sur la figure 4B. Le tambour 28 est entraîné en rotation sur un tour (non représenté) dont l'axe de rotation est confondu avec l'axe de rotation du roulement, et entraîne avec lui par friction le sous-ensemble 10 constitué par le flasque 10B et l'axe 10A. Le rebord 18 est ensuite rabattu à l'aide d'une molette de roulage ou d'une bouterolle contre la surface de maintien 44 constituée par le flasque 10B, jusqu'à prendre la forme 10A représentée sur la figure 4C. Durant cette étape, le sous-ensemble 10 se centre progressivement par rapport au roulement. Les échancrures 10C assurent une meilleure tenue mécanique entre les pièces une fois le montage achevé.

Pour obtenir au niveau du rebord 18 du tambour 28 une résilience importante et au niveau des chemins de roulement 32 une dureté élevée, il est également possible d'effectuer une trempe de la pièce 28, qui lui confère la dureté recherchée au niveau des chemins de roulement, suivie d'un recuit local pour augmenter la résilience du rebord 18.

Sur la figure 5 est illustrée schématiquement une variante pour le montage d'une bague intérieure 26 de roulement sur un élément 10 à équiper. Cette bague 26 comporte un chemin de roulement 30 et un rebord 18 délimitant un logement dont le fond constitue une surface d'appui 16 pour l'élément 10 devant être équipée. Le rebord 18 est épais de sorte qu'une déformation par pliage n'est pas possible. On déforme donc le rebord 18 par fluage rotatif à l'aide d'un outil de roulage jusqu'à ce que le rebord prenne la forme représentée en 18A, en appui sur la surface de maintien 44.

Dans tous les modes de réalisation, l'avance de l'outil de roulage est lente de sorte que le mandrin et le rebord 18 qu'il entraîne font plusieurs tours - en pratique entre 5 et 50 tours - avant que le rebord n'atteigne sa position finale. Dans ces conditions, l'effort radial exercé par la molette reste peu élevé. A titre d'exemple non limitatif, lors du montage d'un galet de poulie du type représenté sur les figures 4A à 4C, avec un jeu initial E=0,5mm, en entraînant le mandrin à 500 tours par minute, une avance de l'outil de 0,05 mm/tour induit des efforts radiaux de l'ordre de 400 daN seulement, pour replier les rebords en 20 tours.

L'existence d'un jeu initial E permet un auto-centrage de la pièce sur laquelle le rebord est rabattu. Cet auto-centrage est réalisé par rapport à l'axe de rotation du tour. Il est donc important de bien positionner initialement l'élément pris dans le mandrin, de manière à ce que l'axe de rotation 24 du mandrin soit confondu avec l'axe suivant lequel on souhaite positionner la pièce.

De manière caractéristique du procédé, du moins dans les variantes des figures 1 à 4 ou la déformation a lieu essentiellement par pliage sans fluage, un jeu subsiste entre le rebord du logement et la pièce sur laquelle le rebord est rabattu.

Naturellement, diverses modifications sont possibles.

On peut prévoir que le rebord déformé soit crénelé, pour faciliter son pliage. Cette variante est applicable notamment aux parois à déformer qui sont épaisses.

L'homme du métier saura en outre combiner entre eux les divers mode de réalisation pour constituer d'autres variantes.

## Revendications

1. Procédé d'assemblage de deux éléments constitués d'une part par une bague de roulement (26, 28) munie d'au moins un chemin de roulement (30, 32) et d'autre part par un élément mécanique (10), le procédé comportant les étapes suivantes :
- un premier des deux éléments est conformé de manière à présenter un rebord annulaire déformable (18) définissant un axe géométrique de référence ;
- l'autre élément est conformé de manière à présenter une surface de maintien (44) ;
- les deux éléments sont mis en appui l'un contre l'autre, le deuxième élément étant libre de se mouvoir dans un plan transversal par rapport au premier élément- et un outil de roulage (40) ayant par rapport au premier élément un mouvement relatif de révolution autour de l'axe géométrique de référence du premier élément vient repousser le rebord (18) pour rabattre radialement le rebord sur la surface de maintien (44) en progressant d'une position de contact initial avec le rebord à une position (18A) de contact final avec le rebord en un temps correspondant à au moins cinq révolutions.

2. Procédé d'assemblage selon la revendication 1, dans lequel le premier élément est fixé à un mandrin (22) qui est mis en rotation pour entraîner les deux éléments autour de l'axe géométrique de référence du premier élément.

3. Procédé d'assemblage selon la revendication 2, dans lequel l'autre élément est entraîné par friction avec le premier élément.

4. Procédé selon l'une quelconque des revendications précédentes, dans lequel l'outil de roulage (40) avance radialement de la position initiale de contact jusqu'à la position finale de contact à une vitesse linéaire correspondant à une progression inférieure à 0,2 mm par tour.

5. Procédé selon l'une quelconque des revendications précédentes, dans lequel le mandrin (22) tourne à une vitesse inférieure à 700 tours par minutes durant l'étape de repoussage.

6. Procédé selon l'une quelconque des revendications précédentes, dans lequel le premier élément est la bague (26, 28).

7. Procédé d'assemblage selon la revendication 6, comprenant en outre une étape de recuit de l'ensemble de la bague (26, 28) pour conférer au rebord (18) une ductilité et une résilience permettant sa déformation par l'outil de roulage (40), l'étape de recuit précédant l'étape de montage sur le tour rotatif.

8. Procédé d'assemblage selon la revendication 7, comprenant en outre une étape de traitement thermique ou thermochimique localisé au niveau du chemin de roulement pour introduire des contraintes résiduelles de compression localisées au niveau du chemin de roulement et ainsi augmenter la dureté du chemin de roulement, l'étape de traitement thermique étant réalisée après l'étape de recuit.

9. Procédé selon la revendication 8, dans lequel l'étape de traitement thermique ou thermochimique localisé est effectuée avant l'étape de montage de la bague sur le tour.

10. Procédé d'assemblage selon la revendication 6, comprenant en outre une étape de recuit préalable du rebord de la bague pour conférer au rebord (18) une ductilité et une résilience permettant son repoussage par l'outil de roulage, l'étape de recuit précédant l'étape de montage sur le tour rotatif.

11. Procédé selon la revendication 10, comprenant en outre une étape de trempe globale de la bague, qui précède l'étape de recuit.

12. Procédé selon l'une quelconque des revendications précédentes, comprenant en outre une étape de montage de la bague de roulement avec une deuxième bague de roulement, des corps roulants étant interposés entre les deux bagues, l'état de montage de la bague précédant l'étape de repoussage du rebord de la première pièce.

13. Procédé selon l'une quelconque des revendications précédentes, **caractérisé en ce que** le rebord déformable est réalisé en matériau fritté non fibré ductile, qui est ensuite comprimé par l'outil de roulage.

14. Ensemble de deux éléments obtenu par un procédé selon l'une quelconque des revendications 1 à 11, **caractérisé en ce que** l'élément mécanique (10) comporte un arbre (10A) s'étendant dans l'axe de rotation de la bague (26, 28).

15. Ensemble de deux éléments obtenu par un procédé selon l'une quelconque des revendications 1 à 11, **caractérisé en ce que** l'organe mécanique comporte une couronne dentée.

16. Ensemble de deux éléments obtenu par un procédé selon l'une quelconque des revendications 1 à 11, **caractérisé en ce que** l'organe mécanique comporte un tambour de poulie.

## Claims

1. A method for assembling two elements composed on the one hand by a rotating ring (26, 28) provided with at least a raceway (30, 32) and on the other hand a mechanical element (10), the method including the following steps:
- a first of the two elements is conformed so as to have a deformable annular rim (18) defining a reference geometric axis;
- the other element is conformed so as to have a retaining surface (44);
- the two elements are resting against each other, the second element being free to move in a transversal plane with respect to the first element, and a curling tool (40) having, with respect to the first element, a relative revolution motion about the reference geometric axis of the first element, spins the rim (18) to radially bend the rim on the retaining surface (44) while progressing from an initial contact position with the rim in a position (18A) of final contact with the rim within a time corresponding to at least five revolutions.

2. An assembling method according to claim 1, wherein the first element is fixed to a mandrel (22) which is rotated to drive the two elements about the reference geometric axis of the first element.

3. An assembling method according to claim 2, wherein the other element is driven by a friction with the first element.

4. A method according to any one of the preceding claims, wherein the curling tool (40) radially progresses from the initial contact position up to the final contact position at a linear speed corresponding to a progression of less than 0.2mm per revolution.

5. A method according to any one of the preceding claims, wherein the mandrel (22) rotates at a speed of less than 700 revolutions per minute during the step of spinning.

6. A method according to any one of the preceding claims, wherein the first element is the ring (26, 28).

7. An assembling method according to claim 6, further including a step of annealing the whole ring (26, 28) to give the rim (18) a ductility and a resilience enabling the deformation thereof by the curling tool (40), with the annealing step preceding the step of mounting on the rotating lathe.

8. An assembling method according to claim 7, further including a step of thermal or thermochemical treatment localised on the raceway to introduce compression residual strains localised on the raceway and thus increase the hardness of the raceway, the step of thermal treatment being carried out after the step of annealing.

9. A method according to claim 8, wherein the step of localised thermal or thermochemical treatment is carried out prior to the step of mounting the ring on the lathe.

10. An assembling method according to claim 6, further including a step of previous annealing of the rim of the ring to give the rim (18) a ductility and a resilience enabling the spinning thereof by the curling tool, with the step of annealing preceding the step of mounting on the rotating lathe.

11. A method according to claim 10, further including a step of global quenching of the ring which comes prior to the step of annealing.

12. A method according to any one of the preceding claims, further comprising a step of mounting the bearing ring with a second bearing ring, with rolling bodies being interposed between both rings, the mounting of the ring coming prior to the step of spinning the rim of the first part.

13. A method according to any one of the preceding claims, **characterised in that** the deformable rim is made of a non-fibred ductile sintered material which is then compressed by the curling tool.

14. An assembly of two elements obtained with a method according to any one of claims 1 to 11, **characterised in that** the mechanical element (10) includes a shaft (10A) extending along the rotation axis of the ring (26, 28).

15. An assembly of two elements obtained with a method according to any one of claims 1 to 11, **characterised in that** the mechanical member includes a toothed ring.

16. An assembly of two elements obtained with a method according to any one of claims 1 to 11, **characterised in that** the mechanical member includes a pulley roll.

## Patentansprüche

1. Verfahren zur Montage von zwei Elementen, die einerseits aus einem Lagerring (26, 28) mit mindestens einem Rollgang (30, 32) versehen und andererseits aus einem mechanischen Element (10) bestehen, wobei das Verfahren folgende Schritte umfaßt:
- ein erstes der beiden Elemente ist so gestaltet, daß es einen ringförmigen verformbaren Überstand (18) aufweist, der eine geometrische Referenzachse definiert;
- das andere Element ist so gestaltet, daß es eine Haltefläche (44) aufweist;
- die beiden Elemente sind aufeinander gestützt, wobei das zweite Element sich frei in einer gegenüber dem ersten Element querverlaufenden Ebene bewegen kann, wobei ein gegenüber dem ersten Element eine relative Umdrehbewegung um die geometrische Referenzachse des ersten Elements durchführendes Rollwerkzeug (40) den Überstand (18) prägt, um den Überstand radial auf die Haltefläche (44) zu bringen und dabei von einer ursprünglichen Position des Kontakts mit dem Überstand zu einer Position (18A) mit Endkontakt mit dem Überstand zu gelangen, dies innerhalb einer Zeit, die mindestens fünf Umdrehungen entspricht.

2. Verfahren zur Montage nach Anspruch 1, **dadurch gekennzeichnet, daß** das erste Element an ein Futter (22) befestigt ist, das in Drehung versetzt wird, um die beiden Elemente um die geometrische Referenzachse des ersten Elements anzutreiben.

3. Verfahren zur Montage nach Anspruch 2, **dadurch gekennzeichnet, daß** das andere Element durch Reibung mit dem ersten Element angetrieben wird.

4. Verfahren nach einem beliebigen der vorstehenden Ansprüche, **dadurch gekennzeichnet, daß** das Rollwerkzeug (40) radial von der ursprünglichen Kontaktposition bis zur Kontaktendposition mit einer linearen Geschwindigkeit nach vorne geht, die einem Fortschritt von unter 0,2 mm pro Umdrehung entspricht.

5. Verfahren nach einem beliebigen der vorstehenden Ansprüche, **dadurch gekennzeichnet, daß** das Futter (22) während des Prägeschritts mit einer Drehzahl von unter 700 Umdrehungen pro Minute dreht.

6. Verfahren nach einem beliebigen der vorstehenden Ansprüche, **dadurch gekennzeichnet, daß** das erste Element der Ring (26, 28) ist.

7. Verfahren zur Montage nach Anspruch 6, **dadurch gekennzeichnet, daß** es ferner einen Schritt mit Glühen der Baugruppe mit dem Ring (26, 28) umfaßt, um dem Überstand (18) eine Duktilität und eine Zähigkeit zu verleihen, die seine Verformung durch das Rollwerkzeug (40) ermöglicht, wobei die Glühphase dem Schritt mit Montage auf die Drehmaschine vorausgeht.

8. Verfahren zur Montage nach Anspruch 7, **dadurch gekennzeichnet, daß** es ferner einen Schritt mit örtlicher Wärmebehandlung oder wärmechemischer Behandlung am Rollgang umfaßt, um örtliche Restbelastungen zur Verdichtung am Rollgang einzubringen und somit die Härte des Rollgangs zu erhöhen, wobei der Schritt mit der Wärmebehandlung nach dem Glühschritt durchgeführt wird.

9. Verfahren zur Montage nach Anspruch 8, **dadurch gekennzeichnet, daß** der Schritt mit örtlicher Wärmebehandlung oder wärmechemischer Behandlung vor dem Schritt mit Montage des Rings auf die Drehmaschine erfolgt.

10. Verfahren zur Montage nach Anspruch 6, **dadurch gekennzeichnet, daß** es ferner einen Schritt mit Glühen des Überstands des Rings umfaßt, um dem Überstand (18) eine Duktilität und eine Zähigkeit zu verleihen, die sein Prägen durch das Rollwerkzeug ermöglicht, wobei die Glühphase dem Schritt mit Montage auf die Drehmaschine vorausgeht.

11. Verfahren zur Montage nach Anspruch 10, **dadurch gekennzeichnet, daß** es ferner einen Schritt mit Gesamthärtung des Rings umfaßt, der dem Glühschritt vorausgeht.

12. Verfahren nach einem beliebigen der vorstehenden Ansprüche, **dadurch gekennzeichnet, daß** es ferner einen Schritt mit Montage des Lagerrings mit einem zweiten Lagerring umfaßt, wobei Rollkörper zwischen die beiden Ringe eingesetzt werden, wobei der Schritt mit Montage des Rings dem Prägeschritt am Überstand des ersten Teils vorausgeht.

13. Verfahren nach einem beliebigen der vorstehenden Ansprüche, **dadurch gekennzeichnet, daß** das verformbare Überstand aus duktilem faserlosem gesintertem Material ausgeführt wird, das dann durch das Rollwerkzeug verdichtet wird.

14. Baugruppe mit zwei Elementen, die mit einem Verfahren nach einem beliebigen der vorstehenden Ansprüche 1 bis 11 erzielt wird, **dadurch gekennzeichnet, daß** das mechanische Element (10) eine Welle (10A) umfaßt, die sich in der Drehrichtung des Rings (26, 28) erstreckt.

15. Baugruppe mit zwei Elementen, die mit einem Verfahren nach einem beliebigen der vorstehenden Ansprüche 1 bis 11 erzielt wird, **dadurch gekennzeichnet, daß** das mechanische Organ einen Zahnkranz umfaßt.

16. Baugruppe mit zwei Elementen, die mit einem Verfahren nach einem beliebigen der vorstehenden Ansprüche 1 bis 11 erzielt wird, **dadurch gekennzeichnet, daß** das mechanische Organ eine Scheibentrommel umfaßt.
